(19) Europäisches Patentamt
European Patent Office
Office européen des brevets

(11) Veröffentlichungsnummer: **0 364 893 B1**

(12) **EUROPÄISCHE PATENTSCHRIFT**

(45) Veröffentlichungstag der Patentschrift: **19.05.93**

(51) Int. Cl.$^5$: **C08G 69/32**

(21) Anmeldenummer: **89119038.1**

(22) Anmeldetag: **13.10.89**

# (54) Vollaromatische Polyamide, Verfahren zu ihrer Herstellung und daraus geformte Gebilde.

(30) Priorität: **18.10.88 DE 3835441**

(43) Veröffentlichungstag der Anmeldung:
**25.04.90 Patentblatt 90/17**

(45) Bekanntmachung des Hinweises auf die Patenterteilung:
**19.05.93 Patentblatt 93/20**

(84) Benannte Vertragsstaaten:
**AT BE CH DE FR GB IT LI LU NL**

(56) Entgegenhaltungen:
**EP-A- 0 199 090**
**EP-A- 0 218 269**
**DE-A- 1 570 890**
**DE-B- 2 144 126**
**US-A- 3 354 125**

(73) Patentinhaber: **HOECHST AKTIENGESELLSCHAFT**
**Postfach 80 03 20**
**W-6230 Frankfurt am Main 80(DE)**

(72) Erfinder: **Keil, Günter, Dr.**
**Frankfurter Strasse 60**
**W-6238 Hofheim am Taunus(DE)**
Erfinder: **Heinrich, Karl**
**Karwendelstrasse 2**
**W-8934 Grossaitingen(DE)**
Erfinder: **Klein, Peter, Dr.**
**Fasanenweg 13**
**W-6200 Wiesbaden(DE)**

EP 0 364 893 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue, vollaromatische Polyamide des Dicarbonsäure-Diamin-Typs, die aus ihren Lösungen in organischen Lösemitteln versponnen werden können sowie daraus hergestellte geformte Gebilde wie Fäden, Fasern, Faserpulp, Filme, Folien und Membranen mit sehr hohem Anfangsmodul (Elastizitätsmodul) sowie Verfahren zu ihrer Herstellung.

Aromatische Polyamide (Polyaramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Die Herstellung der dafür benötigten Polymere erfolgt am günstigsten in bekannter Weise durch Umsetzung von aromatischen Diaminen mit aromatischen Dicarbonsäuredichloriden in aprotischen organischen Lösungsmitteln vom Amid-Typ (N,N-Dimethylacetamid, N-Methylpyrrolidon, N,N,N',N'-Tetramethylharnstoff und dgl.) - gegebenenfalls in Gegenwart von Calcium- oder Lithiumhalogeniden und Neutralisation des gebildeten Chlorwasserstoffs, beispielsweise mit Calciumoxid.

Polyaramide mit hoher Festigkeit und hohem Anfangsmodul sind solche, bei denen die Amidbindungen an den aromatischen Kernen koaxial oder nahezu parallel zueinander orientiert sind, wodurch starre, stäbchenförmige Polymermoleküle entstehen.

Ein typisches Polyamid dieser Art ist beispielsweise Poly-(p-phenylenterephthalamid). Fäden aus diesem Material sind beispielsweise in der Deutschen Patentschrift 22 19 703 beschrieben.

Dieses Polyamid weist eine Reihe von Vorzügen auf, seine Herstellung und seine Verarbeitung sind jedoch sehr schwierig. Wegen der schlechten Löslichkeit in polaren organischen Lösungsmitteln - und zwar auch in Gegenwart von anorganischen Salzen wie Calciumchlorid oder Lithiumchlorid als Lösungsvermittler - fällt dieses Polymer kurz nach seiner Bildung bereits aus dem Reaktionsmedium aus. Es muß isoliert, gewaschen, getrocknet und dann erneut in einem Spinnlösungsmittel gelöst werden. Bevorzugtes Lösungsmittel zur Herstellung der Spinnlösungen ist konzentrierte Schwefelsäure, was besondere Probleme bei der Handhabung (Arbeitssicherheit, Korrosion) und Abfallbeseitigung verursacht.

Es wurde daher versucht, diese Schwierigkeiten dadurch zu umgehen, daß Copolyamide entwickelt wurden, welche eine gute Löslichkeit in den bekannten Amid-Lösungsmitteln haben, die sich auch gut verspinnen lassen und deren Filamente sich nach Verstreckung durch hohe Festigkeitswerte und Anfangsmoduli auszeichnen.

So wurde beispielsweise in der DE-A-21 44 126 die Herstellung von löslichen aromatischen Polyamiden mit hohem Elastizitätsmodul beschrieben, wonach substituierte 3-(p-Aminophenoxy)-4-aminobenzanilide mit Terephthaloylchlorid gut lösliche Polyamide liefern, welche sich zu Filamenten von guten Festigkeiten und Anfangsmoduli verspinnen und verstrecken lassen.

Die erhöhte Löslichkeit wird hier durch die meta-Orientierung und das Sauerstoffbrückenatom verursacht.

In der Deutschen Patentschrift 25 56 883 und in der Deutschen Offenlegungsschrift 30 07 063 werden Copolyamide aus Terephthalsäure, p-Phenylendiamin und 3,4'-Diaminodiphenylether beschrieben, die in Amid-Lösungsmitteln isotrope Lösungen liefern, die sich gut verspinnen lassen. Die Filamente erlangen durch eine sehr hohe Verstreckung hohe Festigkeiten und Moduli. Nachteilig bei den beiden vorgenannten Verfahren ist, daß die benötigten unsymmetrischen Diamine nur in sehr aufwendigen Verfahren hergestellt und gereinigt werden können.

Aus diesem Grund werden in DOS 35 10 655 und 36 05 394, bzw. in EPA 0 199 090 Terephthalamide mit 3 Diaminkomponenten in bestimmten, definierten Anteilen beschrieben, die in Amid-Lösungsmitteln gut löslich sind und durch Verformung Fäden oder Folien mit sehr guten Festigkeiten und Moduli liefern.

Wegen des Gehaltes an nicht-aromatischen Kettenbestandteilen, wie -O- oder $-CH_2$-Gruppen sind die in den letztgenannten Schriften beschriebenen Moduli - in der DOS 35 10 655 werden bis zu 68 N/tex, in der DOS 36 05 394 bis zu 79 N/tex genannt - für bestimmte Anwendungszwecke noch nicht ausreichend hoch.

Fäden aus dem oben erwähnten, in der deutschen Patentschrift 22 19 703 beschriebenen Poly-(p-phenylenterephthalamid) erlangen erst nach einer aufwendigen thermischen Nachbehandlung Moduli bis 99 N/tex (vgl. auch USP 37 67 756, Spalte 11 bzw. DPS 22 19 703, Seite 14).

Der vorliegenden Erfindung liegt daher die Aufgabe zugrunde, solche aromatischen Copolyamide zu finden, die sich unter Verwendung von Amidlösungsmitteln in geformte Gebilde überführen lassen, die sich dann durch eine Reihe von physikalischen Eigenschaften auszeichnen. Bei der Herstellung von Fäden und Fasern sollen nach entsprechenden Verstreckungsvorgängen insbesondere hohe Festigkeiten und sehr

hohe Anfangsmoduli erzielbar sein. Die für die Herstellung der Copolyamide benötigten Monomere sollen leicht zugänglich sein, die durch die Polykondensation erhaltenen Polymerlösungen sollen nach einem Filtrationsprozeß und einer entsprechenden Entgasung direkt spinnbar bzw. formbar sein.

Es gelang, neuartige aromatische Copolyamide zu finden, die überwiegend aus para-substituierten aromatischen Kettenbestandteilen bestehen und überraschenderweise trotzdem in Amid-Lösungsmitteln löslich sind und die sich aus diesen Lösungen zu geformten Gebilden wie Fäden, Fasern, Faserpulp und Folien verarbeiten lassen. Diese Copolyamide weisen zu mindestens 95 Mol-%, vorzugsweise zu 100 Mol-% die folgenden wiederkehrenden - ausschließlich starren - Struktureinheiten:

A $-OC-Ar-CO-$

B

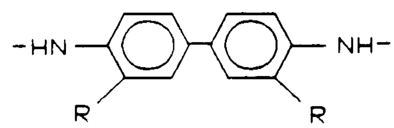

C

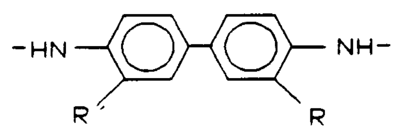

D

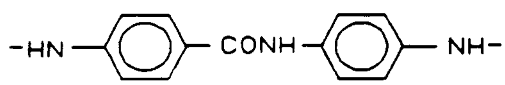

und bis zu 5 Mol-% m-Bindungen enthaltende, von aromatischen Dicarbonsäuren (E') und/oder von aromatischen Diaminen (F') abgeleitete Struktureinheiten E und/oder F auf, wobei die Summe der Molanteile der Struktureinheiten A+E und die Summe der Molanteile der Struktureinheiten B+C+D+F im wesentlichen gleich groß sind.

In diesen Formeln bedeutet

- -Ar- einen zweiwertigen aromatischen Rest, dessen Valenzbindungen in para- oder vergleichbarer koaxialer oder paralleler Stellung stehen und der durch einen oder zwei inerte Reste, wie Niederalkyl oder Halogen substituiert sein kann,
- R einen Alkylrest mit 1 bis 4 Kohlenstoffatomen, und
- R' einen Alkoxyrest mit 1 bis 4 Kohlenstoffatomen.

Die Valenzbindungen, die in koaxialer oder paralleler Stellung stehen, sind entgegengesetzt gerichtet. Ein Beispiel für koaxiale, entgegengesetzt gerichtete Bindungen sind die Diphenyl-4-4'-Bindungen. Ein Beispiel für parallele, entgegengesetzt gerichtete Bindungen sind z.B. die Naphthalin-1,5- oder -2,6-Bindungen, während die Naphthalin-1,8Bindungen parallel gleichgerichtet sind.

Für -Ar- stehende zweiwertige aromatische Reste, bei denen die Valenzbindungen in para- oder vergleichbarer koaxialer oder paralleler Stellung stehen, sind ein- oder zweikernige kondensierte aromatische Reste wie z.B. Phenylen-1,4, Naphthylen-1,4, Naphthylen-1,5, Naphthylen-2,6 und 1,4-Diphenylen.

Bevorzugt für -Ar- ist Phenylen-1,4.

Der Rest -Ar- kann ein- oder zweifach durch Niederalkylreste, das sind geradkettige oder verzweigte Alkylreste mit 1 bis 4 C-Atomen, oder durch Halogen, insbesondere durch F, Cl oder Br substituiert sein. Bevorzugte Alkylsubstituenten sind geradkettig und insbesondere kommen Methyl und Ethyl in Betracht. Bevorzugter Halogensubstituent ist Chlor.

Die erfindungsgemäßen Polyamide können den unsubstituierten Rest -Ar- und die alkyl- und/oder halogensubstituierten Reste -Ar- nebeneinander in wechselnden Anteilen enthalten.

Dabei kann das Polyamid eine Art oder mehrere Arten substituierter Reste −Ar− enthalten; z.B. kann es ausschließlich methylsubstituierte −Ar− Reste oder es kann Anteile von −Ar− Resten mit verschiedenen Alkylsubstituenten und/oder mit Halogensubstituenten enthalten.

Die erfindungsgemäßen Polyamide können aber auch ausschließlich unsubstituierte oder substituierte Reste −Ar− enthalten. Aus Kostengründen sind solche erfindungsgemäßen Polyamide bevorzugt, die nur unsubstituierte oder die bis zu ca. 30 Mol−% substituierte Reste−Ar− enthalten.

Niedere Alkylreste und niedere Alkoxyreste, für die −R und −R' stehen können, sind ebenfalls geradkettig oder verzweigt und haben 1−4 C−Atome. Bevorzugt stehen R und R' für geradkettige Reste und insbesondere für Reste mit 1−2 C−Atomen. Besonders bevorzugt stehen R und R' für Methyl und Methoxy.

Insbesondere steht R für Methyl, R' für Methoxy.

Die aus den in das Polyamid einkondensierten Diaminen stammenden Struktureinheiten B, C und D sind in den erfindungsgemäßen aromatischen Polyamiden nur in den folgenden bestimmten Molprozentbereichen, bezogen auf die Gesamtmenge der Komponenten B, C und D, enthalten:

Struktureinheit B: 30−55 Mol−%, vorzugsweise 33−47 Mol−%,
Struktureinheit C: 15−35 Mol−%, vorzugsweise 20−33 Mol−%,
Struktureinheit D: 20−40 Mol−%, vorzugsweise 33−40 Mol−%.

Dabei beziehen sich diese Mol−%−Angaben auf die Gesamtmenge der Diamin−Struktureinheiten B, C und D.

Neben den Struktureinheiten mit paraständigen oder vergleichbaren, koaxial oder parallel entgegengesetzt gerichteten Bindungen können die erfindungsgemäßen Polyamide bis zu 5 Mol−%, bezogen auf alle Struktureinheiten, m−Bindungen enthaltende Struktureinheiten E und F aufweisen.

m−Bindungen enthaltende Struktureinheiten E und F im Sinne der vorliegenden Erfindung sind solche, die einen aromatischen Kern enthalten, dessen in der Kette des Polymermoleküls liegende Bindungen zueinander in m−Stellung stehen.

Solche Struktureinheiten sind z.B. die Reste von Isophthalsäure, m−Phenylendiamin, 3,4′−Diaminodiphenyl oder deren Alkyl− und/oder Alkoxysubstitutionsprodukten, oder 3,4′− oder 3′,4−Diaminobenzanilid.

Es ist für den Fachmann selbstverständlich, daß die Summe aller von aromatischen Säuren abgeleiteten Struktureinheiten (A+E) und die Summe aller von aromatischen Aminen abgeleiteten Struktureinheiten (B+C+D+F) im wesentlichen gleich sind, das heißt, daß sie sich maximal um ca. 1 %, vorzugsweise maximal um 0,2 %, unterscheiden, insbesondere im Rahmen der praktischen Meß− und Dosierungsmöglichkeiten gleich sind.

Die erfindungsgemäßen aromatischen Polyamide sind in organischen aprotischen polaren Lösungsmitteln löslich und lassen sich aus diesen Lösungen direkt zu geformten Gebilden verarbeiten.

Die dabei erhaltenen Gebilde zeichnen sich durch eine Kombination sehr guter technologischer Eigenschaften aus. Diese in Verbindung mit der Löslichkeit in organischen Lösemitteln und der daraus resultierenden ökonomisch und ökologisch vorteilhaften Verarbeitungsmöglichkeit stellt eine überaus wertvolle Bereicherung der Technik auf dem Gebiet vollaromatischer Polyamide dar.

Die ausgezeichneten technologischen Eigenschaften der erfindungsgemäßen geformten Gebilde beruhen auf dem Einbau der Aminbausteine B, C und D innerhalb der oben angegebenen Grenzen. Wie aus den weiter unten beschriebenen Vergleichsversuchen ersichtlich ist, fallen die technologischen Eigenschaften außerhalb der angegebenen Grenzen stark ab.

Aromatische Polyaramide mit einzelnen der Aminkomponenten B, C und D sind allgemein bekannt.

So wird in der oben zitierten deutschen Offenlegungsschrift Nr 35 10 655, Vergleichsbeispiel 6, gezeigt, daß ein Terephthalamid von 3,3′−Dimethylbenzidin in Amidlösungsmitteln unlöslich und somit nicht spinnbar ist.

Ebenfalls zitiert ist die Verwendung von 3,3′−Dimethylbenzidin zur Herstellung von Aramiden in folgenden Druckschriften:

DPS 30 07 063, Seite 5, Zeile 25,
Vysokomol. Soed. 12 (1970), Nr. 10, S. 2185,
USP 33 18 849,
Belg. Pat. 569 760,
USP 36 71 542,
USP 37 67 756,
P.W. Morgan: "Condensation Polymers", Intersci. Publ. 1965, Seite 180; Japanische Kokai Tokkyo Koho JP 55/71751(80/71751) zit. CA 93 (16), 151120k und Japanische Kokai JP 50/154522(75/154522) zit. CA 84 (16), 106885s.

Der Einsatz von 3,3'-Dimethoxybenzidin wird beispielsweise beschrieben in
DE-A 19 29 713,
J. Polym. Sci. B2, 369 (1964),
U.S.-PS-36 71 542,
Japanische Kokai Tokkyo Koho JP 55/71751(80/71751) zit. CA 93 (16), 151120k.

Die Verwendung von 4,4'-Diaminobenzanilid zur Herstellung von Polyamiden ist mehrfach beschrieben worden:

a) In USP 36 71 542, Beispiel 31 wird gezeigt, daß das Polyamid aus Terephthaloylchlorid und 4,4'-Diaminobenzanilid in Amidlösungsmitteln schwer löslich ist (vgl. hierzu auch USP 37 67 756, Beispiel 5). Aus Schwefelsäure gesponnene Filamente dieses Polymeren erreichen nur mäßige Festigkeiten und Moduli.

Nach EP-A 218 269, Tabelle A und B erreicht ein aus Schwefelsäure gesponnenes Diaminobenzanilidterephthalamid erst nach thermischer Nachbehandlung hohe Festigkeit und hohen Modul. Vergleiche hierzu auch EPA 168 879.

b) Ebenfalls im USP 36 71 542 wird beschrieben, daß ein Copolyamid aus p-Phenylendiamin + 4,4'-Diaminobenzanilid (1:1) und Terephthaloylchlorid + Dibenzoylchlorid oder 2,6-Naphthaloylchlorid (1:1) in Amidlösungsmitteln innerhalb kurzer Zeit gelartig wird. Die Eigenschaften der Fäden (gesponnen aus Schwefelsäure) sind mäßig.

Erst ein 6-Komponenten-Polymer aus (p-Phenylendiamin + 1,5-Diaminonaphthalin + 4,4'-Diaminobenzanilid) und (Terephthaloylchlorid + 2,6-Naphthaloyldichlorid + Dibenzoylchlorid) ergibt eine homogene Lösung in Amid-Lösungsmitteln. Die Eigenschaften der aus Schwefelsäure gesponnenen Filamente sind mäßig.

c) Nach Preston und Mitarb., Polymer letters 4, 1033 (1966), zitiert auch in DOS 21 44 126, Seite 1, zeigen Filamente aus 4,4'-Diaminobenzanilid-terephthalamid niedrige Festigkeiten und besonders niedrige Moduli!

Vergleiche hierzu auch:
USP 33 54 125, Beispiel 4
J. Polym. Sci 22, 855 (1969)
J. Appl. Polym. Sci 16, 3237 (1972), Seite 3239
J. Macromolek. Sci, Chem. Ed. A7, 325 (1973)
Vysokomol. Soed. Ser. B, 25 (9), 672

d) Die Herstellung von Diaminobenzanilidterephthalamid über die Yamazaki-Reaktion (freie Säure + Diamin + Pyridin + Diphenylphosphit) ergibt nur niedrige Viscositäten: Preston und Mitarb., J. Polym. Sci; Polym. Chem. Ed. 20, 79 (1982).

e) In J. Macromolek. Sci, Chem., A7, 325 (1973) und in Kogyo Kagaku Zassi 1968, 71 (3), 443 werden auch Copolyamide mit 3,4'-Diaminobenzanilid beschrieben.

Wie sich aus den zitierten Schriften ergibt, sind die genannten Polyamide in Amidlösungsmitteln meist sehr schwer löslich und somit auch aus diesen organischen Lösungsmitteln nicht spinnbar. Selbst aus Schwefelsäure gesponnenen Filamente weisen meist nur mäßige Eigenschaften auf.

Dagegen sind die Polyamide der vorliegenden Erfindung, die durch Verwendung von Gemischen der Aminkomponenten B+C+D in bestimmten Anteilen hergestellt wurden, überraschenderweise in Amid-Lösungsmitteln löslich und daraus ersponnene Filamente weisen hohe Festigkeit und einen sehr hohen Anfangsmodul auf.

Die Herstellung der erfindungsgemäßen aromatischen Polyamide erfolgt durch Lösungskondensation von aromatischen Dicarbonsäuredichloriden mit dazu äquivalenten Mengen von Mischungen aus aromatischen Diaminen in bekannten Polyamid-Lösemitteln, d.h. in aprotischen, polaren Lösungsmitteln vom Amidtyp, wie z.B. in N,N-Dimethylacetamid, Tetramethylharnstoff oder insbesondere in N-methyl-2-pyrrolidon. Gegebenenfalls können diesen Lösungsmitteln in bekannter Weise zur Erhöhung der Lösefähigkeit bzw. zur Stabilisierung der Polyamidlösungen Halogenidsalze der ersten und zweiten Gruppe des periodischen Systems zugegebenen werden. Bevorzugte Zusätze sind Calciumchlorid und/oder Lithiumchlorid.

Diese Salzzugabe kann vor der Polykondensation oder vorteilhaft unmittelbar nach der Zugabe des Säurechlorids erfolgen.

Die Polykondensationstemperaturen liegen üblicherweise zwischen -20°C und +120°C, bevorzugt zwischen +10°C und +100°C. Besonders gute Ergebnisse werden bei Reaktionstemperaturen zwischen +10°C und +80°C erzielt. Die Polykondensationsreaktionen werden vorzugsweise so ausgeführt, daß nach Abschluß der Reaktion 2 bis 15, vorzugsweise 5 bis 10 Gew.-% an Polykondensat in der Lösung vorliegen. Besonders gute Ergebnisse werden bei Konzentrationen von 5,0 bis 7,5 Gew.-% erzielt.

Im Verlauf der Polykondensation wächst das Molekulargewicht des Polymers und damit auch die Viskosität des Reaktionsansatzes an.

Eine ausreichende Molekül-Kettenlänge ist erreicht, wenn die Viskosität der bei der Polykondensation erhaltenen Polymerlösung einer inhärenten Viskosität des Polymers von ca. 5,0 bis 7,5 dl/g entspricht.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/100 ml.

Sie wurde für die Zwecke der vorliegenden Erfindung bestimmt an Lösungen von jeweils 0,5 g Polymer in 100 ml 98-Gew.%iger Schwefelsäure bei 25 °C.

Das skizzierte, an sich bekannte Verfahren zur Herstellung von aromatischen Polyamiden ist, soweit es zur Herstellung der oben beschriebenen erfindungsgemäßen aromatischen Polyamide dient, ebenfalls Gegenstand der Erfindung. Dieses erfindungsgemäße Verfahren ist dadurch gekennzeichnet, daß man 95 bis 100 Mol-% Säurechloride der Formel

Cl-OC-Ar-CO-Cl (A')

und 0 bis 5 Mol-% von m-Bindungen enthaltende Dichloriden aromatischer Dicarbonsäuren (E') mit einer äquivalenten Menge einer Diaminmischung, die sich zusammensetzt aus
95-100 Mol-% eines Gemisches von Diaminen, bestehend aus
30-55 Mol-%, vorzugsweise 33-47 Mol-% Diaminen der Formel

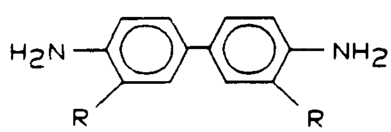 (B'),

15-35 Mol-%, vorzugsweise 20-33 Mol-% Diaminen der Formel

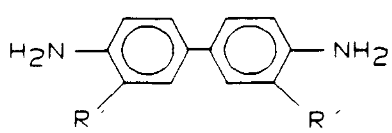 (C')

und 20-40 Mol-%, vorzugsweise 33-40 Mol-% 4,4'-Diaminobenzanilid (D') und aus 0 bis 5 Mol-% von m-Bindungen enthaltenden aromatischen Diaminen (F') in der angegebenen Weise miteinander umsetzt.

m-Bindungen enthaltende aromatische Dicarbonsäure-dichloride und aromatische Diamine im Sinne der vorliegenden Erfindung sind solche, bei denen die Richtungen der Bindungen der beiden Carbonsäurechloridgruppen bzw. der beiden Aminogruppen miteinander einen Winkel bilden, der dem von m-Bindungen entspricht. Solche Dicarbonsäure-dichloride bzw. Diamine sind z.B. Isophthalsäure-dichlorid, m-Phenylendiamin, 3,4'-Diaminodiphenyl oder deren Alkyl- und/oder Alkoxysubstitutionsprodukte, oder 3,4'- oder 3',4-Diaminobenzanilid.

Bei dieser Arbeitsweise bleiben die erhaltenen erfindungsgemäßen Polyamide im Lösungsmittel gelöst.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Anschließend wird der entstandene und locker an das Amidlösungsmittel gebundene Chlorwasserstoff neutralisiert durch Zugabe basischer Substanzen. Geeignet sind dafür beispielsweise Lithiumhydroxyd, Calciumhydroxyd, insbesondere aber Calciumoxid.

Zur Herstellung von geformten Gebilden aus den erfindungsgemäßen Polyamiden werden die erhaltenen neutralisierten Lösungen der erfindungsgemäßen Polyamide filtriert, entgast und in bekannter Weise zu Fäden, Fasern, Faserpulp, Filmen oder auch Folien, die ebenfalls ein Gegenstand der Erfindung sind, weiterverarbeitet. Dies kann beispielweise durch Einsatz einer Naßspinnanlage erfolgen, wo die Polymerlösung durch geeignete Düsen in ein Fällbad ausgepreßt wird, die erhaltenen Fäden durch Waschbäder gezogen und bei höherer Temperatur verstreckt werden. Als Fällbäder eignen sich wäßrige Lösungen des gleichen Amidlösungsmittels, das auch zur Polymerherstellung Verwendung gefunden hat. Es sind aber auch wäßrige Salzlösungen wie z.B. Calciumchloridlösungen verwendbar.

Beim Exrudieren der Polymerlösungen und beim Abzug der geformten Gebilde wie Filamente oder Folien aus dem Fällbad tritt nur eine relativ geringe Naßverstreckung dieser Gebilde ein. Die aus den Fällbädern abgezogenen Gebilde müssen daher nach dem üblichen Waschen und Trocknen einer weiteren Verstreckung unterzogen werden um ihnen die gewünschten mechanischen Eigenschaften, wie hohen Elastizitätsmodul und hohe Reißfestigkeit, zu vermitteln.

Bei der Herstellung der erfindungsgemäßen Fäden und Fasern sowie Folien setzt sich demnach die Gesamtverstreckung zusammen aus einer geringen Naßverstreckung und einer anschließenden höheren Verstreckung. Diese wird der Regel in üblicher Weise bei erhöhter Temperatur auf Streckwerken ausgeführt, in denen zwischen mit unterschiedlicher Umfangsgeschwindigkeit laufenden Galetten eine ein- oder mehrstufige Verstreckung erfolgt.

Um die Filamente auf die erforderliche Verstrecktemperatur zu erwärmen kann eine Kontaktverstrekkung durchgeführt werden, wobei die Filamente über im Streckbereich des Streckwerkes angebrachte heiße Platten ("Bügeleisen") gezogen werden, die Oberflächentemperaturen von 280 °C bis 460 °C, bevorzugt 340 °C bis 450 °C aufweisen. Die Filamente werden dabei im Verhältnis 1:4,0 bis ca. 1:15, bevorzugt 1:4 bis 1:12 verstreckt.

Eine ebenfalls geeignete Variante des Spinnverfahrens ist das sog. "Trockendüsen-Naßspinnverfahren", wie es beispielsweise in der US-A-34 14 645 beschrieben ist. Dort wird von oben nach unten gesponnen und die Spinnfäden passieren nach dem Austritt aus der Düse zunächst ein gasförmiges Medium, vorzugsweise Luft, und treten danach in ein wäßriges Koagulationsbad ein. Die weitere Behandlung der so erzeugten Fäden erfolgt wie oben beschrieben. Die aus den erfindungsgemäßen Rohstoffen hergestellten Formkörper, wie z.B. Fasern, Filamente, Faserpulp oder Folien, dienen beispielsweise als Verstärkungsmaterialien für Kunststoffe bzw. als technische Materialien für Filtration und Isolation. Für Isolationszwecke ist es auch möglich, eine Polymerlösung auf den zu isolierenden Körper als Film aufzutragen und dann das Lösungsmittel und gegebenenfalls anwesende Lösungsvermittler zu entfernen.

Zur weiteren Verdeutlichung der Erfindung sollen die nachfolgenden Beispiele dienen. Die Anteile an Dicarbonsäurekomponenten und Diaminkomponenten wurden jeweils zu 100 Mol-% berechnet.

**Beispiel 1**

Aromatisches Copolyamid aus 100 Mol-% Terephthaloylchlorid, 33,3 % 3,3′-Dimethylbenzidin, 33,3 % 3,3′-Dimethoxybenzidin und 33,3 % 4,4′-Diaminobenzanilid.

5 %ige Polymerlösung.
148,6 g (0,7 Mol) 3,3′-Dimethylbenzidin,
171,0 g (0,7 Mol) 3,3′-Dimethoxybenzidin,
159,1 g (0,7 Mol) 4,4′-Diaminobenzanilid und
70,2 g Lithiumchlorid werden unter Stickstoff gelöst in
13968 g N-Methylpyrrolidon und zwischen 30,0 und 54,2 °C innerhalb von 27 Minuten umgesetzt mit 426,3 g gepulvertem Terephthaloylchlorid. Die Polykondensation wird gestoppt durch Zugabe von 3,3 g Acetylchlorid, gelöst in ca. 100 ml N-Methylpyrrolidon. Die sehr zähe Lösung wird ca. 50 Min. bei ca. 70 °C nachgerührt und mit 195 g einer 65 %igen Suspension von Calziumoxid (96 %) in N-Methylpyrrolidon neutralisiert.

Die Lösung enthält 5,0 % Copolyamid, 1,55 % Calziumchlorid und 0,47 % Lithiumchlorid. Das Copolyamid hat eine inhärente Viskosität von 5,31.

Die Lösung wird filtriert und entgast und in einem Naßspinnprozeß versponnen. Dazu wird sie aus einer Düse mit 100 Öffnungen von je 0,10 mm Durchmesser in ein waagerecht angeordnetes Koagulationsbad, bestehend aus einer 60 °C warmen Lösung von 35 % N-Methylpyrrolidon in Wasser ausgepreßt und mit einer Geschwindigkeit von 16 m/min abgezogen. Der Faden durchläuft Waschbäder, Trockengaletten (120 °C, 160 °C und 240 °C) und schließlich ein vierteiliges Bügeleisen mit Oberflächentemperaturen von 360 °C, 380 °C, 400 °C, 400 °C und wird mit 101 m/min abgezogen. Dabei wurde hier, wie in den folgenden Beispielen und Vergleichsbeispielen die Abzugsgeschwindigkeit so bemessen, daß sich für die Filamente

ein Verstreckverhältnis von 80 % des maximalen Verstreckverhältnisses ergab.

Danach wird das Multifilamentgarn hier und in den folgenden Beispielen mit einem Schutzdrall entsprechend $\alpha$ m = 30 (DIN 53 832, Teil 1) versehen und anschließend geprüft. Bei diesem Beispiel beträgt der Einzelfilamenttiter 1,5 dtex (DIN 53 830), die feinheitsbezogene Höchstzugkraft beträgt 199 cN/tex bei einer Höchstzugkraftdehnung von 2,6 % (DIN 53 834, Teile 1). Der Modul ist 87 N/tex. Der Modul wird aus der Steigung des feinheitsbezogenen Kraft-Dehnungs-Diagramms zwischen 0.3 und 0.5 % Dehnung errechnet.

Der Anfangsmodul wird hier wie in den folgenden Beispielen aus dem Kraft-Dehnungsdiagramm gewonnen bei 0,3 - 0,5 % Dehnung.

**Beispiel 2 bis 9**

Analog Beispiel 1, jedoch unter den in Tabelle 1 angegebenen Reaktionsbedingungen und unter Einsatz der dort genannten Ausgangsmaterialien können weitere erfindungsgemäße aromatische Polyamide hergestellt werden.

Die so erhaltenen Polyamide mit unterschiedlichen Zusammensetzungen bezüglich der Diamin-Struktureinheiten B, C und D können anschließend analog Beispiel 1 direkt aus der Reaktionslösung versponnen und verstreckt werden. Spinn- und Streckbedingungen sowie die Eigenschaften der so erhaltenen Filamente sind ebenfalls aus der Tabelle 1 ersichtlich.

In der Tabelle 1 werden folgende Abkürzungen verwendet:
TPC = Terephthaloylchlorid; DMB = 3,3'-Dimethylbenzidin; DMOB = 3,3'-Dimethoxybenzidin; DABA = 4,4'Diaminobenzanilid; N = Naßspinnen; TN = Trocken-Naßspinnen

Tabelle 1

| | Beispiel 2 | 3 | 4 | 5 | 6 | 7 | 8 | 9 |
|---|---|---|---|---|---|---|---|---|
| **Polymerisation** | | | | | | | | |
| DMB Mol | 0,8 | 1,05 | 0,84 | 0,7875 | 1,05 | 0,175 | 0,216 | 0,27 |
| Mol % | 33,3 | 50 | 40 | 37,5 | 50 | 27,8 | 30 | 33,3 |
| g | 169,8 | 222,9 | 178,3 | 167,2 | 222,9 | 37,15 | 45,86 | 56,6 |
| DMOB Mol | 0,8 | 0,525 | 0,42 | 0,525 | 0,42 | 0,21 | 0,216 | 0,27 |
| Mol % | 33,3 | 25 | 20 | 25 | 20 | 33,3 | 30 | 33,3 |
| g | 195,4 | 128,2 | 102,6 | 128,2 | 102,6 | 51,2 | 52,74 | 65,1 |
| DABA Mol | 0,8 | 0,525 | 0,84 | 0,7875 | 0,63 | 0,245 | 0,216 | 0,27 |
| Mol % | 33,3 | 25 | 40 | 37,5 | 30 | 38,9 | 30 | 33,3 |
| g | 181,8 | 119,3 | 190,9 | 179,0 | 143,2 | 55,6 | 49,05 | 60,6 |
| Sonstiges | - | - | - | - | - | - | 3,4'DABA | Chlor-TPC |
| Mol | - | - | - | - | - | - | 0,072 | 0,12 |
| Mol % | - | - | - | - | - | - | 10 | 15 |
| g | - | - | - | - | - | - | 16,36 | 28,5 |
| $LiCl/CaCl_2$ | $CaCl_2$ | $CaCl_2$ | $CaCl_2$ | $CaCl_2$ | $CaCl_2$ | $CaCl_2$ | $CaCl_2$ | $CaCl_2$ |
| g | 120 | 74,3 | 74,4 | 74,7 | 74,1 | 22,6 | 25,7 | - |

Tabelle 1, Fortsetzung

| | Beispiel | | | | | | | |
|---|---|---|---|---|---|---|---|---|
| | 2 | 3 | 4 | 5 | 6 | 7 | 8 | 9 |
| **Polymerisation** | | | | | | | | |
| NMP g | 13062 | 13808 | 13832 | 13881 | 13780 | 4192 | 4129 | 4012 |
| TPC g | 487,2 | 426,3 | 426,3 | 426,3 | 429,3 | 127,9 | 146,2 | 138,05 |
| Reaktionstemp. °C | 31,5-56,4 | 30,7-56,6 | 31,2-56,5 | 30,1-53,8 | 30,8-58,8 | 12,9-61,1 | 14-52 | 13-72 |
| Reaktionszeit Min | 50 | 50 | 45 | 30 | 75 | 40 | 45 | 35 |
| Acetylchlorid g | 3,8 | 3,3 | 3,3 | 3,3 | 3,3 | - | - | - |
| CaO[1] g | 222 | 195 | 195 | 195 | 195 | 59,4 | 66,6 | 74,0 |
| Polymerkonz. % | 6 | 5 | 5 | 5 | 5 | 5 | 5,7 | 6 |
| Salzkonz. % | 2,70 $CaCl_2$ | 2,07 $CaCl_2$ | 2,07 $CaCl_2$ | 2,06 $CaCl_2$ | 2,07 $CaCl_2$ | 2,22 $CaCl_2$ | 2,35 $CaCl_2$ | 2,03 $CaCl_2$ |
| Polymerviscosität $\eta_{inh}$ | 5,54 | 6,82 | 6,31 | 5,84 | 6,32 | 7,00 | 5,35 | 5,48 |

1) 65 %ige Suspension von 96 %igem CaO in NMP

Tabelle 1, Fortsetzung

| | Beispiel 2 | 3 | 4 | 5 | 6 | 7 | 8 | 9 |
|---|---|---|---|---|---|---|---|---|
| **Spinnen und Strecken** | | | | | | | | |
| Verfahren | TN | TN | TN | TN | N | N | N | N |
| Temp.Spinnlösung °C | 100 | 100 | 100 | 100 | 100 | 80 | 100 | 100 |
| Düsen-Lochzahl | 100 | 100 | 100 | 100 | 100 | 100 | 100 | 100 |
| Düsen-Loch-Durchmesser mm | 0,15 | 0,15 | 0,15 | 0,15 | 0,15 | 0,15 | 0,15 | 0,10 |
| Abstand-Düse-Fällbad mm | 40 | 40 | 40 | 40 | 40 | - | - | - |
| Fällbadzusammensetzung % NMP | 35 | 35 | 35 | 35 | 35 | 35 | 35 | 35 |
| Fällbadtemp. °C | 60 | 60 | 60 | 60 | 60 | 60 | 60 | 80 |
| Abzugsgeschwindigkeit m/min | 16,0 | 16,0 | 16,0 | 16,0 | 16,0 | 16,0 | 16,1 | 16,2 |
| Trockengalettentemp. °C | 120;160 240 | 120;160 240 | 160;240 | 160;240 | 120;160 240 | 120;160 240 | 160;220 | 330;330 240 |
| Bügeleisentemperatur | 350;370; 390;390 | 370;380; 390;390 | 390;390; 410;410 | 390;390; 410;410 | 390;390; 410;410; 430 | 340;360; 380;380 | 350;360; 370;380 | 330;330; 350;350 |
| Abzugsgeschwindigkeit m/min | 160,9 | 125,0 | 107 | 104,1 | 120,6 | 69,3 | 129,8 | 69,5 |

Tabelle 1, Fortsetzung

| | Beispiel | | | | | | | |
|---|---|---|---|---|---|---|---|---|
| | 2 | 3 | 4 | 5 | 6 | 7 | 8 | 9 |
| **Filamenteigenschaften** | | | | | | | | |
| Einzeltiter dtex | 2,88 | 2,23 | 1,93 | 1,89 | 1,90 | 1,85 | 1,78 | 1,75 |
| Feinheitsfestigk. cN/tex | 167 | 184 | 177 | 179 | 192 | 150 | 146 | 118 |
| Dehnung % | 2,4 | 2,3 | 2,3 | 2,4 | 2,3 | 2,1 | 2,6 | 1,9 |
| Anfangsmodul N/tex | 77 | 86 | 85 | 88 | 89 | 80 | 69 | 73 |

**Vergleichsbeispiele 1 bis 3**

Analog Beispiel 1, jedoch unter den in Tabelle 2 angegebenen Reaktionsbedingungen und unter Einsatz der dort genannten Ausgangsmaterialien wurden weitere aromatische Polyamide hergestellt.

Die so erhaltenen Polyamide mit unterschiedlichen Zusammensetzungen bezüglich der Diamin-Struktureinheiten B, C und D wurden anschließend analog Beispiel 1 direkt aus der Reaktionslösung versponnen und verstreckt. Die Spinn- und Streckbedingungen sowie die Eigenschaften der so erhaltenen Filamente sind ebenfalls aus der Tabelle 2 ersichtlich.

In der Tabelle 2 werden die gleichen Abkürzungen verwendet wie in Tabelle 1.

Tabelle 2

| | | Vergleichsbeispiel | |
|---|---|---|---|
| | 1 | 2 | 3 |
| **Polymer** | | | |
| DMB Mol | 0,064 | 0,96 | 0,288 |
| Mol % | 20 | 30 | 40 |
| g | 13,6 | 20,4 | 61,1 |
| DMOB Mol | 0,16 | 0,128 | 0,288 |
| Mol % | 50 | 40 | 40 |
| g | 39,08 | 31,3 | 70,3 |
| DABA Mol | 0,096 | 0,096 | 0,144 |
| Mol % | 30 | 30 | 20 |
| g | 21,8 | 21,8 | 32,7 |
| Sonstiges | | | |
| Mol | | | |
| Mol % | | | |
| g | | | |
| $LiCl/CaCl_2$ g | LiCl 23,2 | LiCl 32,0 | LiCl 21,5 |
| NMP g | 2146 | 2124 | 3934 |
| TPC g | 66,5 | 65,8 | 146,2 |
| Reaktionstemp. °C | 10-68 | 10-68 | 40-69 |
| Reaktionszeit min | 45 | 45 | 30 |
| Acetylchlorid g | - | - | - |
| CaO[1)] g | 30,1 | 30,1 | 66,6 |
| Polymerkonz. % | 5 | 5 | 5 |
| Salzkonz. % | 1,53 $CaCl_2$ +1,0 LiCl | 1,55 $CaCl_2$ +1,0 LiCl | 1,86 $CaCl_2$ +0,5 LiCl |
| Polymervisc. $\eta_{inh}$ | 6,16 | 5,90 | 5,32 |

Tabelle 2, Fortsetzung

| | Vergleichsbeispiel 1 | 2 | 3 |
|---|---|---|---|
| **Spinnen und Strecken** | | | |
| Verfahren | N | N | N |
| Temp.-Spinnlösung °C | 90 | 90 | 90 |
| Düsen-Lochzahl | 50 | 50 | 50 |
| Düsen-Lochdruchmesser mm | 0,15 | 0,15 | 0,15 |
| Abstand-Düse-Fällbad mm | - | - | - |
| Fällbadzusammensetzg. % NMP | 35 | 35 | 35 |
| Fällbadtemp. °C | 60 | 60 | 60 |
| Abzugsgeschwindigkeit m/min | 15,9 | 15,9 | 16,1 |
| Trockengalettentemperatur °C | 160;180 | 160;180 | 160;180 |
| Bügeleisentemp. °C | 360;380 400;400 | 340;360 380;380 | 340;360 370;370 |
| Abzugsgeschwindigkeit m/min | 142,6 | 127,6 | 169,8 |
| **Filamenteigenschaften** | | | |
| **Einzeltiter dtex** | 1,92 | 1,82 | 1,24 |
| **Feinheitsfestigkeit cN/tex** | 62 | 112 | 94 |
| **Dehnung %** | 1,3 | 1,8 | 1,8 |
| **Anfangsmodul N/tex** | 68 | 79 | 71 |

Die Vergleichsversuche zeigen, daß aromatische Polyamide, deren Zusammensetzung außerhalb der erfindungsgemäßen Bereiche liegen zwar ebenfalls zu Filamenten versponnen werden können, daß dabei aber nicht die Kombination der guten mechanischen Eigenschaften der erfindungsgemäßen Filamente erreicht werden können.

**Patentansprüche**

**1.** Aromatisches Copolyamid, dadurch gekennzeichnet, daß es zu mindestens 95 Mol% die wiederkehrenden Struktureinheiten der Formeln

A -OC-Ar-CO-

B

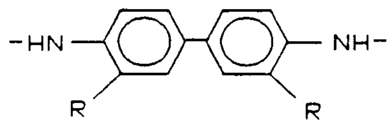

C

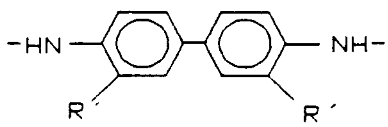

D

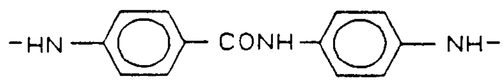

und bis zu 5 Mol% m–Bindungen enthaltende, von aromatischen Dicarbonsäuren (E') und/oder von aromatischen Diaminen (F') abgeleitete Struktureinheiten E und/oder F aufweist, wobei die Summen der Molanteile der Struktureinheiten A+E und der Molanteile der Struktureinheiten B+C+D+F im wesentlichen gleich groß sind,
–Ar– einen zweiwertigen aromatischen Rest bedeutet, dessen Valenzbindungen in para– oder vergleichbarer koaxialer oder paralleler Stellung stehen und der durch einen oder zwei inerte Reste, wie Niederalkyl oder Halogen substituiert sein kann,
– R einen Alkylrest mit 1 bis 4 Kohlenstoffatomen,
– R' einen Alkoxyrest mit 1 bis 4 Kohlenstoffatomen, und die Anteile der Diaminkomponenten B, C und D im Verhältnis zur Gesamtmenge dieser Diaminkomponenten innerhalb folgender Grenzen liegen:
Struktureinheit B: 30–55 Mol–%,
Struktureinheit C: 15–35 Mol–%,
Struktureinheit D: 20–40 Mol–%.

**2.** Copolyamide gemäß Anspruch 1, dadurch gekennzeichnet, daß –Ar– 1,4–Phenylen, 1,4–, 1,5– oder 2,6–Naphthylen oder 1,4–Diphenylen ist.

**3.** Copolyamide gemäß mindestens einem der Ansprüche 1 und 2, dadurch gekennzeichnet, daß –Ar ein 1,4–Phenylenrest ist der unsubstituiert oder durch einen Alkylrest mit 1 bis 4 Kohlenstoffatomen oder ein Halogenatom substituiert ist.

**4.** Copolyamide gemäß mindestens einem der Ansprüche 1 bis 3, dadurch gekennzeichnet, daß –Ar– ein 1,4–Phenylenrest ist, der unsubstituiert oder durch eine Methylgruppe oder ein Chloratom substituiert ist.

**5.** Copolyamide gemäß mindestens einem der Ansprüche 1 bis 4, dadurch gekennzeichnet, daß –Ar– ein unsubstituierter 1,4–Phenylenrest ist.

**6.** Copolyamide gemäß mindestens einem der Ansprüche 1 bis 5, dadurch gekennzeichnet, daß
–R ein Alkylrest mit 1 bis 2 Kohlenstoffatomen, und
–R' ein Alkoxyrest mit 1 bis 2 Kohlenstoffatomen ist.

**7.** Copolyamide gemäß mindestens einem der Ansprüche 1 bis 6, dadurch gekennzeichnet, daß –R Methyl und –R' Methoxy ist.

**8.** Copolyamide gemäß mindestens einem der Ansprüche 1 bis 7, dadurch gekennzeichnet, daß die m–Bindungen enthaltende Struktureinheit der zweiwertige Rest des 3,4'– oder 3',4–Diaminobenzanilids

ist.

**9.** Copolyamide gemäß mindestens einem der Ansprüche 1 bis 8, dadurch gekennzeichnet, daß die Anteile der Diaminkomponenten B, C und D im Verhältnis zur Gesamtmenge an Diaminkomponenten innerhalb folgender Grenzen liegen:
Diamin B: 33 – 47 Mol – %
Diamin C: 20 – 33 Mol – %
Diamin D: 33 – 40 Mol – %

**10.** Verfahren zur Herstellung der aromatische Copolyamide des Anspruchs 1, durch Polykondensation eines Dicarbonsäurechlorids mit aromatischen Diaminen in einem organischen aprotischen polaren Lösemittel vom Amidtyp, gegebenenfalls in Gegenwart eines Alkali – oder Erdalkalihalogenids bei erhöhter Temperatur, dadurch gekennzeichnet, daß man 95 bis 100 Mol% Säurechloride der Formel

Cl – OC – Ar – CO – Cl (A')

und 0 bis 5 Mol – % von m – Bindungen enthaltende aromatische Dicarbonsäure – dichloride (E') mit einer äquivalenten Menge einer Diaminmischung, die sich zusammensetzt aus 95 – 100 Mol% eines Gemisches von Diaminen, bestehend aus
30 – 55 Mol% Diaminen der Formel

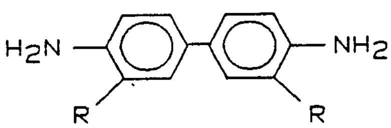

(B′),

15 – 35 Mol – % Diaminen der Formel

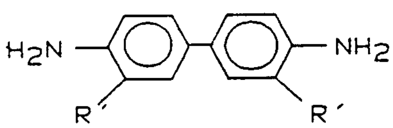

(C′),

und 20 – 40 Mol – % 4,4' – Diamino – benzanilid (D')
und aus 0 bis 5 Mol % von m – Bindungen enthaltenden Diaminen (F′), umsetzt.

**11.** Verfahren gemäß Anspruch 10 dadurch gekennzeichnet, daß man ein Gemisch von Diaminen umsetzt, das die folgende Zusammensetzung aufweist:
33 – 47 Mol% B′,
20 – 33 Mol% C′,
33 – 40 Mol% D′.

**12.** Geformte Gebilde wie Fäden, Fasern, Faserpulp, Folien und Membrane aus aromatischen Copolyamiden des Dicarbonsäure – Diamin – Typs, dadurch gekennzeichnet, daß das geformte Material ein aromatisches Copolyamid des Anspruchs 1 ist.

## Claims

**1.** An aromatic copolyamide, which comprises at least 95 mol% of recurrent structural units of the formulae
A – OC – Ar – CO –
B

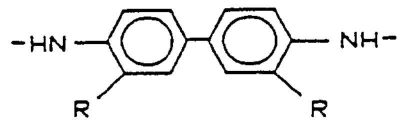

C

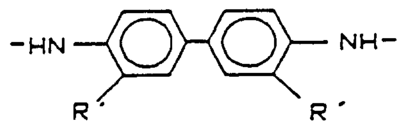

D

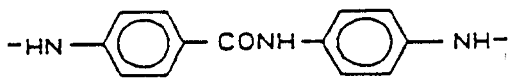

and up to 5 mol% of structural units E and/or F which contain m-bonds and are derived from aromatic dicarboxylic acids (E') and/or from aromatic diamines (F'), the totals of the mol fractions of the structural units A + E and of the mol fractions of the structural units B + C + D + F being substantially the same,

-Ar- being a divalent aromatic radical, the valency bonds of which are in the para- position or in a comparable coaxial or parallel position and which may be substituted by one or two inert radicals such as lower alkyl or halogen,

-R being an alkyl radical having 1 to 4 carbon atoms,

$-R^1$ being an alkoxy radical having 1 to 4 carbon atoms,

and the fractions of the diamine components B, C and D relative to the total quantity of these diamine components being inside the following limits:

structural unit B: 30-55 mol%

structural unit C: 15-35 mol%,

structural unit D: 20-40 mol%.

**2.** A copolyamide as claimed in claim 1, wherein -Ar- is 1,4-phenylene, 1,4-, 1,5- or 2,6-naphthylene or 1,4-diphenylene and

**3.** A copolyamide as claimed in at least one of claims 1 and 2, wherein -Ar- is a 1,4-phenylene radical which is unsubstituted or substituted by an alkyl radical having 1 to 4 carbon atoms or by a halogen atom.

**4.** A copolyamide as claimed in at least one of claims 1 to 3, wherein -Ar- is a 1,4-phenylene radical which is unsubstituted or substituted by a methyl group or a chlorine atom.

**5.** A copolyamide as claimed in at least one of claims 1 to 4, wherein -Ar- is an unsubstituted 1,4-phenylene radical.

**6.** A copolyamide as claimed in at least one of claims 1 to 5, wherein

-R is an alkyl radical having 1 or 2 carbon atoms, and

-R' is an alkoxy radical having 1 or 2 carbon atoms.

**7.** A copolyamide as claimed in at least one of claims 1 to 6, wherein -R is methyl and -R' is methoxy.

**8.** A copolyamide as claimed in at least one of claims 1 to 7, wherein the structural unit containing m-bonds is the divalent radical of 3,4'- or 3',4-diaminobenzanilide.

**9.** A copolyamide as claimed in at least one of claims 1 to 8, wherein the fractions of the diamine components B, C and D relative to the total quantity of diamine components are inside the following limits:
diamine B: 33 – 47 mol%
diamine C: 20 – 33 mol%
diamine D: 33 – 40 mol%.

**10.** A process for preparing an aromatic copolyamide of claim 1, by polycondensation of a dicarboxylic acid chloride with aromatic diamines in an organic aprotic polar solvent of the amide type, if necessary in the presence of an alkali metal halide or alkaline earth metal halide, at an elevated temperature, which comprises reacting 95 to 100 mol% of acid chlorides of the formula

Cl – OC – Ar – CO – Cl (A')

and 0 to 5 mol% of aromatic dicarboxylic acid dichlorides (E') containing m – bonds with an equivalent quantity of a diamine mixture composed of 95 – 100 mol% of a mixture of diamines comprising
30 – 55 mol% of diamines of the formula
30 – 55 mol% of diamines of the formula

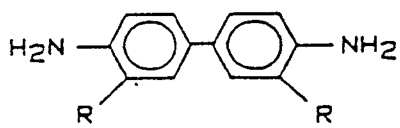

(B')

15 – 55 mol% of diamines of the formula

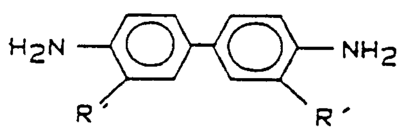

(C')

and
20 – 40 mol% of 4,4' – diaminobenzanilidide (D') and of 0 to 5 mol% of diamines (F') containing m – bonds.

**11.** The process as claimed in claim 10, wherein a mixture of diamines is reacted which has the following composition:
33 – 47 mol% of B',
20 – 33 mol% of C',
33 – 40 mol% of D'.

**12.** Shaped structures such as filaments, fibers, fiber pulp, films or sheets and membranes of aromatic copolyamides of the dicarboxylic acid/diamine type, wherein the shaped material is an aromatic copolyamide of claim 1.

## Revendications

**1.** Copolyamide aromatique, caractérisé en ce qu'il est constitué, pour au moins 95 % en moles, des motifs structuraux répétitifs ayant les formules suivantes :
A – OC – Ar – CO –
B

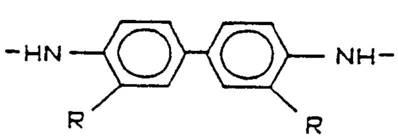

C

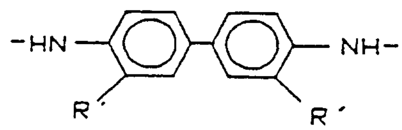

D

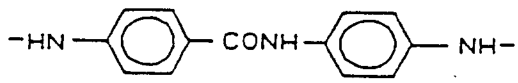

et jusqu'à 5 % en moles de motifs structuraux E et/ou F, dérivant d'acides dicarboxyliques aromatiques (E') et/ou de diamines aromatiques (F'), la somme des pourcentages en moles des motifs structuraux A et E étant essentiellement égale à la somme des pourcentages en moles des motifs structuraux B, C, D et F,

- –Ar– est un radical aromatique divalent, dont les liaisons de valence se trouvent en position para ou sont coaxiales ou parallèles les unes aux autres, et qui peut être substitué par un ou deux radicaux inertes, tels que les radicaux alkyle inférieur ou halogéno,
- –R est un radical alkyle ayant de 1 à 4 atomes de carbone, et
- –R' est un radical alkyle ayant de 1 à 4 atomes de carbone,

et les pourcentages des composants diaminés B, C et D présentent par rapport à la quantité totale des composants diaminés un rapport entrant dans les intervalles suivants :
Motif structural B : 30–55 % en moles,
Motif structural C : 15–35 % en moles,
Motif structural D : 20–40 % en moles.

**2.** Copolyamides selon la revendication 1, caractérisés en ce que –Ar– est le radical phénylène-1,4, naphtylène-1,4, -1,5 ou -2,6, ou diphénylène-1,4.

**3.** Copolyamides selon au moins l'une des revendications 1 et 2, caractérisés en ce que –Ar– est un radical phénylène-1,4, qui est non substitué ou encore substitué par un radical alkyle ayant de 1 à 4 atomes de carbone, ou un atome d'halogène.

**4.** Copolyamides selon au moins l'une des revendications 1 à 3, caractérisé en ce que –Ar– est un radical phénylène-1,4, qui est non substitué ou est substitué par un groupe méthyle ou un atome de chlore.

**5.** Copolyamides selon au moins l'une des revendications 1 à 4, caractérisés en ce que –Ar– est un radical phénylène-1,4 non substitué.

**6.** Copolyamides selon au moins l'une des revendications 1 à 5, caractérisés en ce que –R est un radical alkyle ayant 1 ou 2 atomes de carbone, et –R' est un radical alcoxy ayant 1 ou 2 atomes de carbone.

**7.** Copolyamides selon au moins l'une des revendications 1 à 6, caractérisés en ce que –R est le radical méthyle et –R' le radical méthoxy.

**8.** Copolyamides selon au moins l'une des revendications 1 à 7, caractérisés en ce que le motif structural contenant des liaisons m est le radical divalent du diamino-3,4' ou -3',4 benzanilide.

**9.** Copolyamides selon au moins l'une des revendications 1 à 8, caractérisés en ce que les pourcentages des composants diaminés B, C et D, par rapport à la quantité totale de composants diaminés, entrent dans les intervalles suivants :
diamine B : 33–47 % en moles,
diamine C : 20–33 % en moles,

diamine D : 33 – 40 % en moles.

**10.** Procédé pour préparer les copolyamides aromatiques de la revendication 1, par polycondensation d'un chlorure d'un acide dicarboxylique avec des diamines aromatiques dans un solvant polaire aprotique organique du type amide, éventuellement en présence d'un halogénure d'un métal alcalin ou alcalino-terreux à haute température, caractérisé en ce qu'on fait réagir :
de 95 à 100 % en moles de chlorures d'acides de formule

Cl – OC – Ar – CO – Cl (A')

et de 0 à 5 % en moles de dichlorures d'acides dicarboxyliques aromatiques (E') contenant des liaisons m, avec une quantité équivalente d'un mélange de diamines constitué de 95 à 100 % en moles d'un mélange de diamines ayant la constitution suivante :
30 à 35 % en moles de diamines de formule

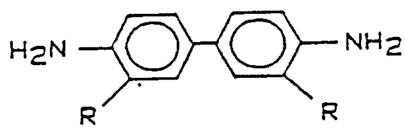

(B')

15 à 35 % en moles de diamines de formule

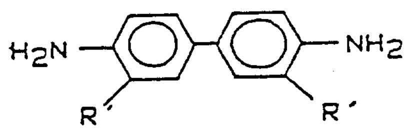

(C')

et 20 à 40 % en moles de diamino-4,4' benzanilide (D'),
et
de 0 à 5 % en moles de diamines (F') contenant des liaisons m.

**11.** Procédé selon la revendication 10, caractérisé en ce qu'on fait réagir un mélange de diamines ayant la composition suivante :
30 – 47 % en moles de B',
20 – 33 % en moles de C',
33 – 40 % en moles de D'.

**12.** Structures façonnées telles que des fils, des fibres, de la pulpe de fibres, des feuilles ou des membranes, obtenues à partir de copolyamides aromatiques du type diamine d'acide dicarboxylique, caractérisées en ce que le matériau façonné est un copolyamide aromatique selon la revendication 1.